# EUROPEAN PATENT APPLICATION

(11) **EP 1 871 021 A2**
(43) Date of publication of application: **26.12.2007**
(21) Application number: 07110636.3
(22) Date of filing: 20.06.2007
(51) Int. Cl.: H04B 10/10

(54) **Optical Signal Transmitter and Optical Wireless Communication Network Using It**

(30) Priority: 20.06.2006 KR 20060055542
(71) Applicant: Samsung Electronics Co., Ltd., Suwon-si, Gyeonggi-Do (KR)
(72) Inventor: Kim, Byung-Jik c/o Samsung Electronics Co., Ltd., Gyeonggi-do (KR); Hwang, Seong-Taek c/o Samsung Electronics Co., Ltd., Gyeonggi-do (KR); Cho, Kyu-Man c/o Samsung Electronics Co., Ltd., Gyeonggi-do (KR); Huh, Hyeong-Jun c/o Samsung Electronics Co., Ltd., Gyeonggi-do (KR); Kwon, Kang-Hyuk c/o Samsung Electronics Co., Ltd., Gyeonggi-do (KR)
(74) Representative: Grünecker, Kinkeldey, Stockmair & Schwanhäusser Anwaltssozietät

(57) **Abstract**

An optical wireless communications network connects a plurality of communication cells, which are defined by dividing a local communication area, for enabling optical wireless communication in each of the communication cells. An optical signal transmitter is installed in each communication cell for irradiating the cell with a data-modulated optical signal to perform data transmission to a terminal located therein. The optical signal transmitter comprises an optical signal source for outputting the data-modulated optical signal, and an optical signal diffuser with a concave inside surface facing the output end of the optical signal source for diffusing and reflecting the data-modulated optical signal to irradiate the cell.

## Description

### BACKGROUND OF THE INVENTION

### 1. Field of the Invention

The present invention relates to an optical wireless communications, and more particularly to an optical transmitter/receiver that enables data communication by transmitting and receiving optical signals through free space.

### 2. Description of the Related Art

Generally there are three ways of constructing an optical wireless communications LAN (Local Area Network) for enabling optical wireless communication in a building as follows:
First, LOS (Line-Of-Sight) communications requires a line-of-sight state between a base station (BS) and a terminal (TE) for the base station to send optical signals directly to the terminal;
Second, NLOS (Non-Line-Of-Sight) communications wherein the base station transmits optical signals toward the walls and ceiling so that the optical signals may be reflected by them toward the receiving terminal; and
Third, the hybrid communications combines the LOS and NLOS methods wherein the base station transmits a part of the optical signals toward the walls and ceiling for reflection and transmits directly to the receiving terminal.

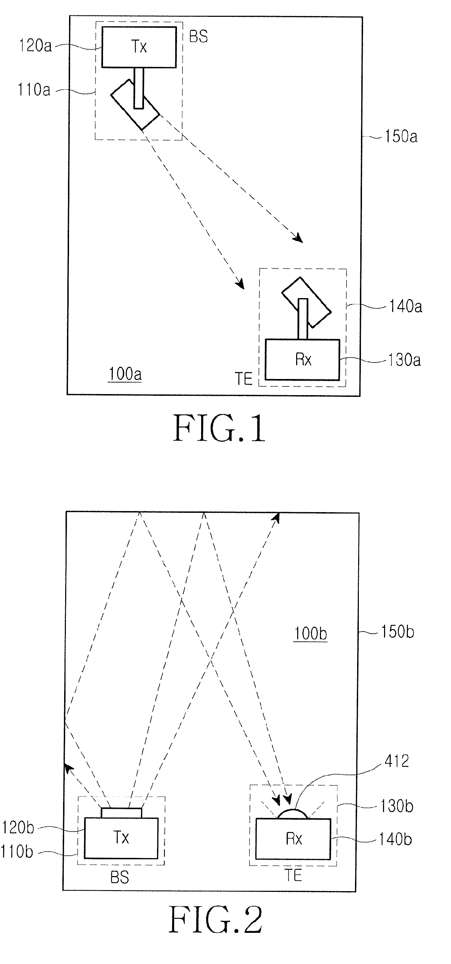

Fig. 1 schematically shows a conventional optical wireless LAN using the first conventional LOS communications. The optical wireless LAN 100a installed in a building 150a includes a base station BS 110a with an optical signal transmitter TX 120a, and a terminal TE 140a with an optical signal receiver RX 130a. Although not shown, the base station 110a is connected to an external communication line including a high speed communication network, e.g., Ethernet. The optical signal transmitter 120a transmits directly to the optical signal receiver 130a a data-modulated optical signal through free space providing a LOS communication between them. This LOS communication enables bidirectional high-speed data exchanges provided that the base station 110a also includes an optical signal receiver and the terminal 140a includes an optical signal transmitter (not shown). However, this configuration suffers a disadvantage in that objects like traversing or moving within the communication path may destroy the LOS connectivity. Thus, the LOS method preferably employs an optical signal transmitter with a small divergence angle for optical efficiency.

Fig. 2 schematically shows a second conventional optical wireless LAN using a conventional NLOS communication method. In this case, the optical wireless LAN 100b installed in building 150b includes a base station BS 110b having an optical signal transmitter TX 120b, and a terminal TE 130b having an optical signal receiver RX 140b. Although not shown, the base station 110b is connected to an external communication line. In this case, light of sight communication is not established between the optical signal transmitter 120b and the optical signal receiver 140b. Rather, the data-modulated optical signal is sent from the optical signal transmitter 120b to the optical signal receiver 140b by reflection of the optical signal by the walls and ceiling of the building 150b. As the optical signal travels from the optical signal transmitter 120b through various paths to the optical signal receiver 140b, the optical signal receiver 140b requires a collecting lens 142 of a large acceptance angle in order to enhance the power of the optical signal. This NLOS communication method is advantageous as it minimizes the shadow effect due to obstructions. In addition, because the walls and ceiling may provide ideal scattering surfaces approaching a Lambertian surface, the power of the scattered optical signal per unit solid angle may be considered uniform in reference to the whole divergence angle of the walls or ceiling. However, the NLOS communications causes the optical signal to be scattered into a plurality of optical signal components each having a largely different path reaching the optical signal receiver at different times (i.e.,, having the same starting point but different in the time of reaching the receiver). Furthermore, the multiple signal paths increases the inter-symbol interferences (ISI) resulting the received signal resulting in degradation in the communication speed. It is desirable to employ an optical signal transmitter of large divergence angle together with an optical signal receiver of large acceptance angle for the optical efficiency of the NLOS communications.

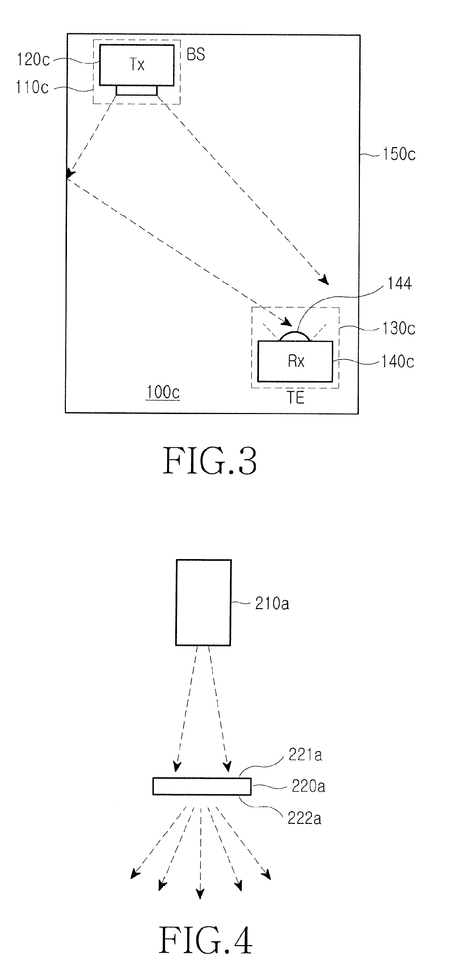

Fig. 3 schematically shows still another conventional optical wireless LAN using the third conventional hybrid communications. The optical wireless LAN 100c installed in building 150c includes a base station BS 110c with an optical signal transmitter TX 120c, and a terminal TE 130c with an optical signal receiver RX 140c. Although not shown, the base station 110c is connected to an external communication line. In this case, the data-modulated optical signal is sent toward both the optical signal receiver 140c and the walls of the building 150c by the transmitter 120c. Hence a part of the optical signal travels through free space directly to the optical signal receiver 140c, and another part is reflected by the walls and then delivered to the optical signal receiver 140c. This also causes the optical signal from the optical signal transmitter 120c to be scattered into optical signal components that reach the optical signal receiver 140c through different paths, and therefore it is desirable for the optical signal receiver 140c to use a collecting lens 144 with a large acceptance angle in order to enhance the power of the received optical signal. This hybrid communications also results in ISI together with degradation of the communication speed as in the NLOS communications.

The NLOS communications suffers the following drawbacks:
First, as the positions of the ceiling and walls, and the inner space of the building varies with the height and area of the ceiling, it is hardly possible to provide standardized optical wireless communication services except for customized services according to a given building environment. Hence, the role of the field engineer is critical, which results in increase of the installing cost, and the difficulties of standardizing the optical wireless communication services increase the production cost of the optical signal transmitter and receiver.
Second, because the scattered optical signal components each with a large path difference are delivered to the optical signal receiver, ISI limits the communication speed.
Third, the optical signal transmitter must have a high power output to compensate for low power caused by scattering of the optical signal, thus again increasing the production cost. In addition, great care must be taken in order to protect the eye from the scattered optical signals.
Fourth, only the downstream link for transmitting the optical signal from the base station to the terminal has been considered. For it has been desirable not to provide the terminal with an optical transmitter with a high power output for the reason of protecting the eye, and therefore the upstream link for transmitting the optical signal from the terminal to the base station has been considered almost impossible.

### SUMMARY OF THE INVENTION

The present invention provides an optical signal transmitter that requires a low output power for stable operation with minimized ISI without being affected by a building's internal environment, and an optical wireless communications network using it.

According to an aspect of the present invention, in an optical wireless communications network connecting a plurality of communication cells, defined by dividing a local communication area for enabling optical wireless communication in each of the communication cells, an optical signal transmitter installed in each communication cell for irradiating the cell with a data-modulated optical signal to perform data transmission to a terminal located therein, the transmitter comprises an optical signal source for outputting the data-modulated optical signal, and an optical signal diffuser with a concave inside surface facing the output end of the optical signal source for diffusing and reflecting back the data-modulated optical signal to irradiate the cell.

According to another aspect of the present invention, in an optical wireless communications network connecting a plurality of communication cells defined by dividing a local communication area for enabling optical wireless communication in each of the communication cells, an optical signal transmitter installed in each communication cell for irradiating the cell with a data-modulated optical signal to perform data transmission to a terminal located therein, the transmitter comprises an optical signal source for outputting the data-modulated optical signal, an optical signal diffuser both for diffusing and reflecting back a part of the data-modulated optical signal and for diffusing and transmitting the remaining part thereof, and a concave mirror with a concave inside surface facing the optical signal diffuser for reflecting back the data-modulated optical signal diffused by the optical signal diffuser toward the cell.

According to still another aspect of the present invention, in an optical wireless communications network connecting a plurality of communication cells defined by dividing a local communication area for enabling optical wireless communication in each of the communication cells, an optical signal transmitter installed in each communication cell for irradiating the cell with a data-modulated optical signal to perform data transmission to a terminal located therein, the transmitter comprises an optical signal source for outputting the data-modulated optical signal, and a convex mirror having a convex lower surface facing the output end of the optical signal source and an upper surface opposite to the lower surface, wherein the convex lower surface has a reflective layer deposited thereon for reflecting back and diverging the data-modulated optical signal outputted by the optical signal source toward the cell.

According to a further aspect of the present invention, an optical wireless communications network connecting a plurality of communication cells defined by dividing a local communication area for enabling optical wireless communication in each of the communication cells, includes an optical signal transmitter installed in each communication cell for irradiating the cell with a data-modulated optical signal to perform data transmission to a terminal located therein, wherein the optical signal transmitter comprises an optical signal source for outputting the data-modulated optical signal, and an optical signal diffuser with a concave inside surface facing the output end of the optical signal source for diffusing and reflecting back the data-modulated optical signal to irradiate the cell.

According to still a further aspect of the present invention, an optical wireless communications network connecting a plurality of communication cells defined by dividing a local communication area for enabling optical wireless communication in each of the communication cells, includes an optical signal transmitter installed in each communication cell for irradiating the cell with a data-modulated optical signal to perform data transmission to a terminal located therein, wherein the optical signal transmitter comprises an optical signal source for outputting the data-modulated optical signal, an optical signal diffuser for diffusing and reflecting back a part of the data-modulated optical signal and for diffusing and transmitting the remaining part thereof, and a concave mirror with a concave inside surface facing the optical signal diffuser for reflecting back the data-modulated optical signal diffused by the optical signal diffuser toward the cell.

According to further another aspect of the present invention, an optical wireless communications network connecting a plurality of communication cells defined by dividing a local communication area for enabling optical wireless communication in each of the communication cells, includes an optical signal transceiver installed in each communication cell for irradiating the cell with a downward data-modulated optical signal to perform data transmission to a terminal located therein, wherein the optical signal transceiver comprises an optical signal source for outputting the downward data-modulated optical signal, and a convex mirror having a convex lower surface facing the output end of the optical signal source and a convex upper surface opposite to the lower surface, the convex lower surface having a dichroic reflective layer deposited thereon for reflecting back and diverging the downward data-modulated optical signal outputted by the optical signal source toward the cell, and for transmitting and converging upward optical signals incident thereon.

### BRIEF DESCRIPTION OF THE DRAWINGS

The above features and advantages of the present invention will become more apparent from the following detailed description when taken in conjunction with the accompanying drawing in which:
FIG 1 is a schematic diagram for showing a conventional optical wireless LAN using conventional LOS communication method;
FIG. 2 is a schematic diagram for showing another conventional optical wireless LAN using conventional NLOS communication method;
FIG 3 is a schematic diagram for showing still another conventional optical wireless LAN using a conventional hybrid communication method;
FIGS. 4 to 6 are schematic diagrams showing various optical signal diffusers according to the present invention;
FIG 7 is a schematic diagram showing a base station according to a first embodiment of the present invention;
FIG 8 is a schematic diagram showing a base station according to a second embodiment of the present invention;
FIG 9 is a schematic diagram showing a base station according to a third embodiment of the present invention;
FIG 10 is a schematic diagram showing a base station according to a fourth embodiment of the present invention;
FIG. 11 is a schematic diagram showing a base station according to a fifth embodiment of the present invention;
FIG 12 is a schematic diagram showing a base station according to a sixth embodiment of the present invention;
FIG. 13 is a schematic diagram showing a base station according to a seventh embodiment of the present invention; and
FIGs. 14A and 14B are schematic diagrams showing a base station according to an eighth embodiment of the present invention.

### DETAILED DESCRIPTION

Exemplary embodiments of the present invention will be described herein below with reference to the accompanying drawings. In the drawings, the same or similar elements are denoted by the same reference numerals even though they are depicted in different drawings. For the purposes of clarity and simplicity, well-known functions or constructions are not described in detail as such detail would obscure the invention in unnecessary detail.

The inventive optical wireless communications network connects a plurality of communication cells defined by dividing a local communication area for enabling optical wireless communication in each of the communication cells having their respective base stations. Each base station includes at least an optical signal transmitter with directivity for selectively irradiating the corresponding cell. The inventive optical signal transmitters all have directivity, and are classified into types associated with a type of optical signal diffuser as shown in Figs. 4 to 6 is used.

Referring to Fig. 4, there is shown a transmission-type optical signal diffuser 220a with parallel upper and lower surfaces 221 a and 222a. The upper surface 221a of the diffuser 220a faces the output end of an optical signal source 210a so as to be irradiated by the optical signal generated from the optical signal source 210a. The diffuser 220a diffuses the optical signal passing through the upper and lower surfaces 221 a and 222a. The diffuser 220a may be a holographic diffuser, which has a high transmission rate and diffusing characteristics similar to a Lambert surface, together with an advantage to adjust the diffusing angle. Such holographic diffuser may uniformly irradiate the cell by setting a proper diffusing angle according to the size of the cell.

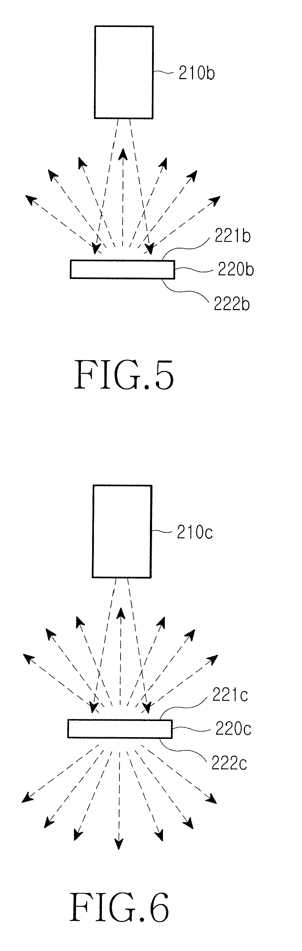

Referring to Fig. 5, there is shown a reflection-type diffuser 220b with parallel upper and lower surfaces 221b and 222b. The upper surface 221b of the diffuser 220b faces the output end of an optical signal source 210b so as to be irradiated by the optical signal generated by the optical signal source 210b. The diffuser 220b diffuses and reflects back the optical signal incident on the upper surface 221b.

Referring to Fig. 6, there is shown a transmission/reflection-type diffuser 220c with parallel upper and lower surfaces 221c and 222c. The optical signal from the optical signal source 210c irradiated on the upper surface 221c is diffused, partly reflected back and partly transmitted. The diffuser may be made of a ground glass or opal glass.

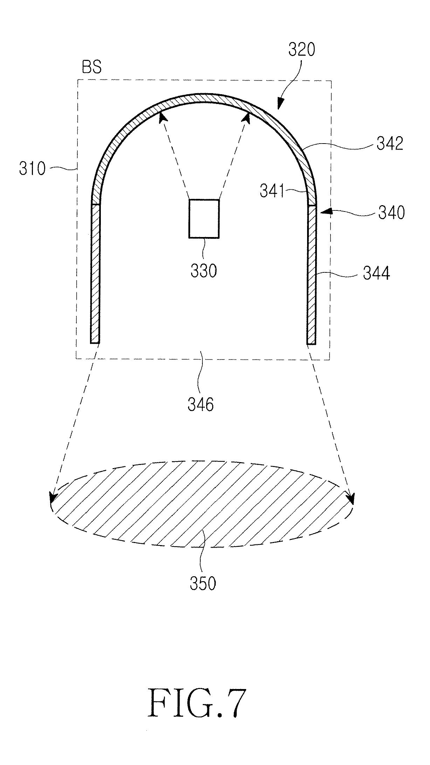

Referring to Fig. 7, there is shown a base station according to a first embodiment of the present invention. The base station BS 310 serves to perform the optical wireless communication within a given area or cell 350 by means of an optical signal transmitter 320 for irradiating the cell 350 with a data-modulated optical signal. The optical signal transmitter 320 includes an optical signal source 330 and an optical signal diffuser 340.

The optical signal source 330 for outputting data-modulated optical signals of a predetermined wavelength may be made of a laser diode (LD), light emitting diode (LED), optical fiber, etc. The optical fiber serves to transmit optical signals from one end to the other end. To this end, a separate optical source may be connected to one end of the optical fiber. The wavelength of the light used in the optical wireless communication is typically in the infrared region, i.e., equal to or above 650nm, but may be in the visible light region.

An optical signal diffuser 340 comprises a main body 342 with a hollow semispherical concave inside 341 and an open end and a hollow cylindrical sleeve 344 extended from the open end of the main body. The semispherical concave inside surface may have varieties of forms like hyperbolic, elliptical, and angular surfaces. The optical signal source 330 is installed inside the diffuser 340 with its light generating output end facing the concave inside 341 of the diffuser 340. The optical signal output from the optical signal source 330 is directed toward the concave inside of the diffuser 340, which acts as a concave mirror, thereby diffused and reflected back toward the opening 346 of the sleeve 344 toward the cell 350.

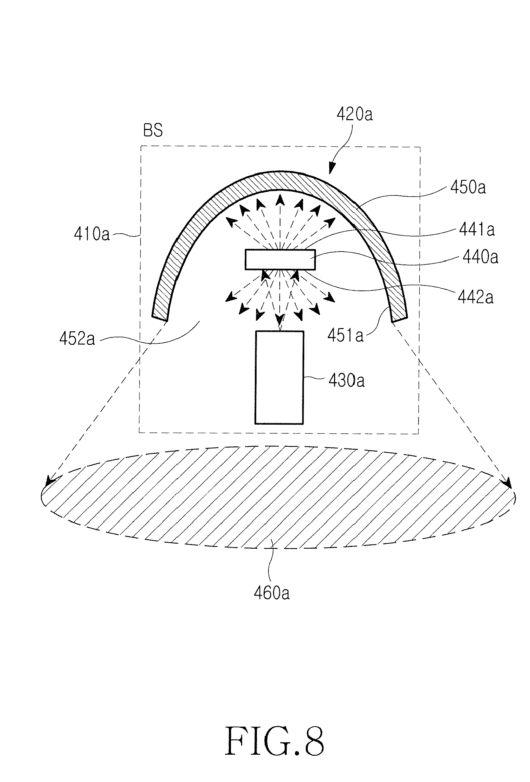

Referring to Fig. 8, there is shown a second embodiment of the base station BS 410a performing the optical wireless communication within a cell 460a. The base station BS 410a includes an optical signal transmitter 420a for irradiating the cell 460a with a data-modulated optical signal. The optical signal transmitter 420a comprises an optical signal source 430a, an optical signal diffuser 440a, and a concave mirror 450a. The data-modulated optical signal has a predetermined wavelength.

The diffuser 440a, in this illustrative case, is a transmission/reflection-type with parallel upper and lower surfaces 441 a and 442a. The diffuser 440a is arranged inside the concave mirror 450a with its upper surface 441 a facing the inside 451a of the concave mirror 450a. The diffuser 440a is positioned between the concave mirror 450a and the light-generating output end of the optical signal source 430a so that the light-generating output end of source 430a faces lower surface 442a of diffuser 440a. The optical signal source 430a irradiates the lower surface of 442a of the diffuser 440a, which diffuses the optical signal, and partly reflects back and partly transmits the diffused light.

The concave inside surface 451 a of the concave mirror 450a may be selected from a group of forms such as, hemispherical, circular, hyperbolic, elliptical, and angular. A portion of the optical signal diffused by the diffuser 440a is outputted through the opening 452a of the concave mirror 450a, and the remaining portion, which is irradiated onto the concave inside surface 451 a of the concave mirror 450a, is reflected through the opening 452a toward the cell 460a. In another aspect of the invention, the concave mirror 450a may be replaced by a second diffuser (not shown) to effect secondary diffusion.

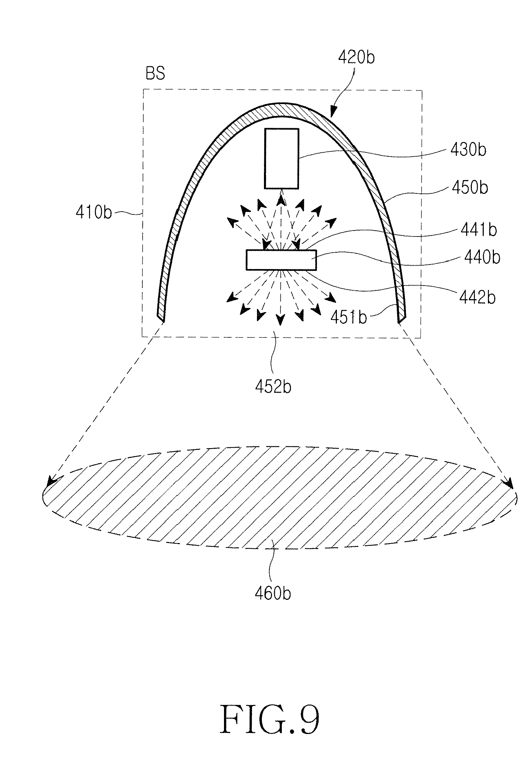

Fig. 9 shows a third embodiment of the base station BS 410b for performing the optical wireless communication within a cell 460b. The base station 410b includes an optical signal transmitter 420b for irradiating the cell 460b with a data-modulated optical signal. The optical signal transmitter 420b comprises an optical signal source 430b, an optical signal diffuser 440b, and a concave mirror 450b. The data-modulated optical signal has a predetermined wavelength.

The diffuser 440b is a transmission/reflection-type with parallel upper and lower surfaces 441b and 442b and is arranged inside the concave mirror 450b with the upper surface 441b facing the concave inside surface 451b of the concave mirror 450b. The optical signal source 430b is arranged between the upper surface 441 b of the diffuser 440b and the inside of the concave mirror 450b so as to irradiate the upper surface 441b of the diffuser 440b with the optical signal, which diffuses, partly reflects and partly transmits the optical signal.

The concave inside surface 451b of the concave mirror 450b may have varieties of forms, such as, hyperbolic, elliptical, and angular. A portion of the optical signal diffused by the diffuser 440b is outputted through the opening 452b of the concave mirror 450b, and the remaining portion is irradiated onto the concave inside surface 451 b of the concave mirror 450b, which reflects back the optical signal through the opening 452b toward the cell 460b.

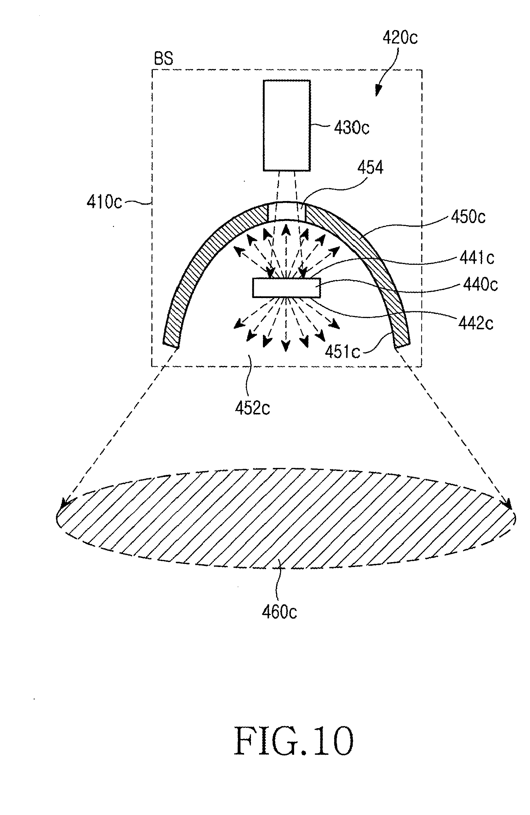

Fig. 10 shows a fourth embodiment of the base station BS 410c for performing the optical wireless communication within a cell 460c, which includes an optical signal transmitter 420c for irradiating the cell 460c with a data-modulated optical signal. The optical signal transmitter 420c comprises an optical signal source 430c, an optical signal diffuser 440c, and a concave mirror 450c. The data-modulated optical signal has a predetermined wavelength.

The diffuser 440c is a transmission/reflection-type with parallel upper and lower surfaces 441c and 442c and is arranged inside the concave mirror 450c with the upper surface 441c facing the concave inside surface 451c of the concave mirror 450c. The optical signal source 430b is arranged outside the concave mirror 450c with its light-generating output end facing the upper surface 441c of the diffuser 440c through a hole 454 formed in the concave mirror 450c. The optical signal output of the optical signal source 430c is irradiated onto the upper surface 441 c of the diffuser 440c, which diffuses, partly reflects and partly transmits the optical signal.

The hole 454 is formed at the center of the concave mirror 450c. A part of the optical signal diffused by the diffuser 440c is outputted through the opening 452c of the concave mirror 450c, and the remaining part, which is irradiated onto the concave inside surface 451c of the concave mirror 450c, which reflects the optical signal through the opening 452c toward the cell 460c.

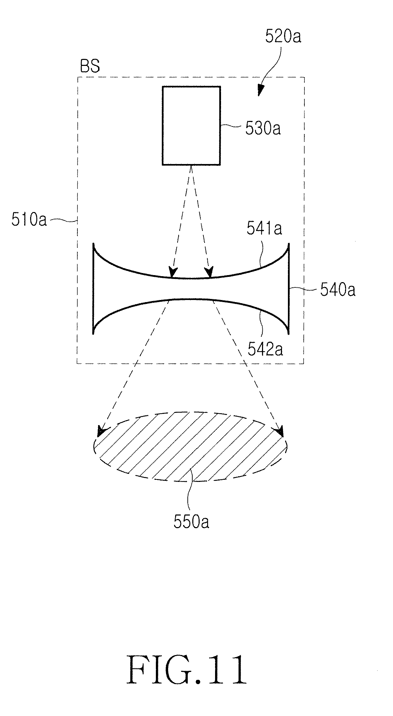

Fig. 11 shows a fifth embodiment of the base station BS 510a for performing the optical wireless communication with a cell 550a. The base station BS 510a includes an optical signal transmitter 520a for irradiating the cell 550a with a data-modulated optical signal. The optical signal transmitter 520a comprises an optical signal source 530a, and a concave lens 540a. The data-modulated optical signal has a predetermined wavelength.

The concave lens 540a has upper and lower surfaces 541 a and 542a symmetrically formed which are both concave. The upper surface 541a of the concave lens 540a is arranged to face the light-generating output end of the optical signal source 530a, so that the concave lens 540a diverges the optical signal incident on the upper surface 541 a, transmitting it through the lower surface 542a. The optical signal transmitter 520a may have a conventional TO-can packaging structure so that the optical signal source 530a and concave lens 540a are installed within a housing (not shown) of the TO-can packaging structure, and then the concave lens 540a may replace the window constituting the TO-can packaging structure.

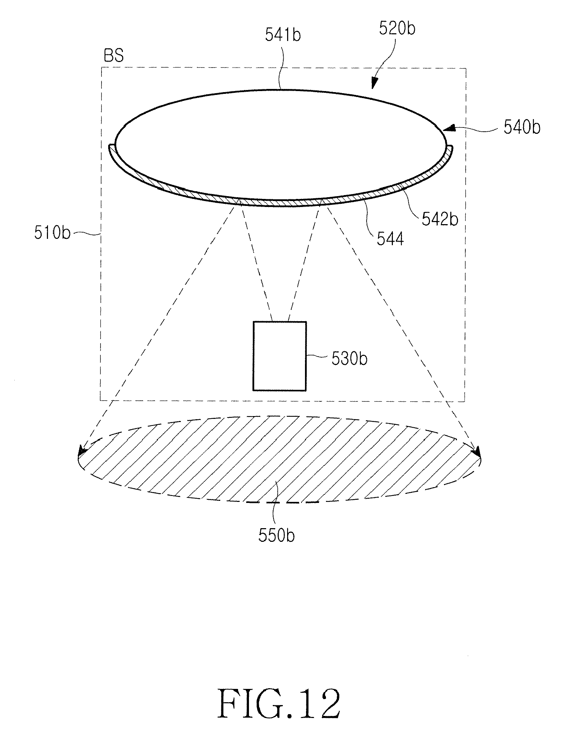

Fig. 12 shows a sixth embodiment of the base station BS 510b for performing the optical wireless communication within a cell 550b, which includes an optical signal transmitter 520b for irradiating the cell 550b with a data-modulated optical signal. The optical signal transmitter 520b comprises an optical signal source 530b, and a convex mirror 540b. The data-modulated optical signal has a predetermined wavelength.

The convex mirror 540b has symmetrically arranged upper and lower convex surfaces 541b and 542b, and the lower convex surface 542b includes a reflective layer 544 deposited thereon. The reflective layer 544 faces the light-generating output end of the optical signal source 530b. The optical signal outputted from the optical signal source 530b is reflected and diverged by the reflective layer 544 of the convex mirror 540b. Namely, the convex mirror 540b serves to both reflect and diverge the optical signal incident thereon.

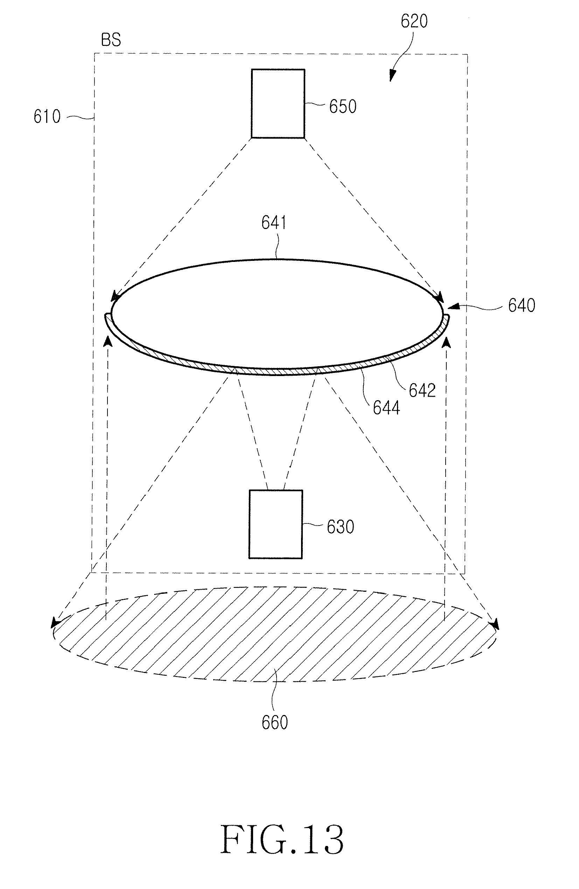

Fig. 13 shows a seventh embodiment of the base station BS 610 for performing the optical wireless communication with a cell 660, which includes an optical signal transceiver 620 for irradiating the cell 660 with a downward data-modulated optical signal. The optical signal transceiver 620 comprises an optical signal source 630, an optical signal detector 650, and a convex mirror 640. The downward data-modulated optical signal has a predetermined wavelength. The optical signal detector 650 detects upward optical signals converted into electrical signals.

The convex mirror 640 has symmetrically arranged upper and lower convex surfaces 641 and 642, and the lower convex surface 642 includes a uniform dichroic reflective layer 644 deposited thereon. The uniform dichroic reflective layer 644 partially transmits the upward optical signal and partially reflects the downward optical signal. In this case, the upward optical signal has a wavelength different from that of the downward optical signal. The lower convex surface 642 of the convex mirror 640 faces the output end of optical signal source 630, and the upper convex surface 641 faces the input end of the optical signal detector 650. The downward optical signal outputted from the optical signal source 630 is reflected back by the dichroic reflective layer 644 of the convex mirror 640, diverged by the lower convex surface 642. Namely, the convex mirror 640 serves both to reflect and to diverge the downward optical signal incident thereon. In addition, another optical signal source (not shown) provided in the terminal (not shown) of the cell 660 generates an upward data-modulated optical signal irradiated on the dichroic reflective layer 644, which transmits it through the convex mirror 640. The upper and lower convex surfaces 641 and 642 of the convex mirror 640 serve to converge the upward data-modulated optical signal transmitted.

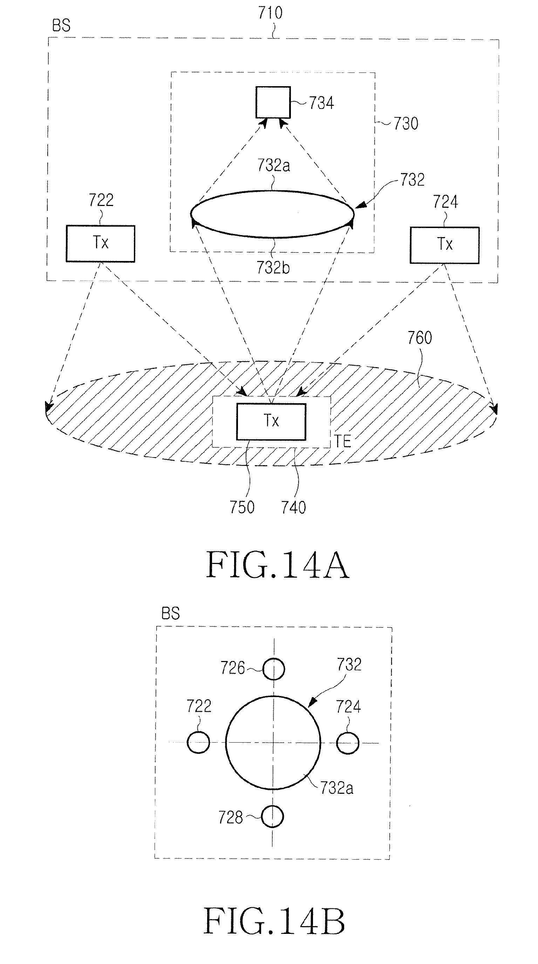

Figs. 14A and B show a base station BS 710 according to an eighth embodiment of the present invention. Fig. 14A shows a side elevation of the base station BS 710, and Fig. 14B a plane view thereof The base station 710 performs the optical wireless communication within a cell 760, including first to fourth optical signal transmitters 722 to 728 for irradiating the cell 760 with downward data-modulated optical signals and an optical signal receiver 730 for receiving upward data-modulated optical signals. The first to fourth optical signal transmitters 722 to 728 are arranged substantially symmetrical in the form of a cross about the optical signal receiver 730 to respectively irradiate the cell 760 with the downward data-modulated optical signals. The first to fourth optical signal transmitters 722 to 728 may be of one of the optical signal transmitters as described in the first to sixth embodiments.

The optical signal receiver 730 includes an optical signal detector 734 and a convex lens 732 with upper and lower convex surfaces 732a and 732b symmetrically arranged. The upward data-modulated optical signal outputted from an optical signal source 750 provided in a terminal 740 of the cell 760 is irradiated on the lower convex surface 732b of the convex lens 732. The upper and lower convex surfaces 732a and 732b of the convex lens 732 serve to converge the upward optical signal transmitted. The optical signal detector 734 faces the upper convex surface 732a of the convex lens 732 so as to convert the upward optical signal received from the convex lens 732 into an electrical signal. In other aspects of the invention, multiple optical signal transmitters may be arranged in the form of a line (using two transmitters), or in the form of a star (using six transmitters). In addition, if the optical signal receiver 730 uses an infrared wavelength, it is preferably provided with an infrared filter (not shown) to eliminate background lights other than those within the infrared region, thereby minimizing the noises.

Moreover, the first to fourth embodiments using an infrared wavelength for the optical wireless communication may be provided with illumination light sources in addition to the optical signal sources 330, 430a-430c. In this case, the illumination light sources illuminate the diffusers 340, 440a-440c with visible light. Furthermore, the optical signal source may be fixed to the diffuser with epoxy resin, and made of a laser diode, LED, optical fiber, etc.

As described above, the inventive optical signal transmitter enables a plurality of cells defined by dividing a local communication area to be separately irradiated with the data-modulated optical signals, so that the optical wireless communications network using it may work stably with low power without being affected by the building's internal environment and minimize intersymbol interference. Further, the invention enables the optical signal transmitter and the optical wireless communications network to be standardized, thereby considerably reducing the cost by means of mass production. Besides the invention provides means for using illumination light sources together with the optical signal sources, so that the communication installation may be visibly watched.

While the invention has been shown and described with reference to a certain preferred embodiment thereof, it will be understood by those skilled in the art that various changes in form and details may be made therein without departing from the spirit and scope of the invention.

## Claims

1. An optical signal transmitter (320) for an optical wireless communications network connecting a plurality of communication cells defined by dividing a local communication area for enabling optical wireless communication in each of said communication cells, an optical signal transmitter installed in each communication cell for irradiating the cell with a data-modulated optical signal to perform data transmission to a terminal located therein, the optical signal transmitter comprising:
an optical signal source (330) for outputting said data-modulated optical signal; and
an optical signal diffuser (340) with a concave inside surface (341) facing the output end of said optical signal source, said diffuser diffusing and reflecting said data-modulated optical signal to irradiate said cell.

2. An optical signal transmitter (320) as defined in Claim 1, wherein said optical signal diffuser (340) comprises:
a main body (342) with said concave inside surface (341) and an open end, and
a hollow cylindrical sleeve (344) extended from the open end of said main body.

3. An optical signal transmitter (420a, 420b, 420c) for an optical wireless communications network connecting a plurality of communication cells, which are defined by dividing a local communication area for enabling optical wireless communication in each of said communication cells, an optical signal transmitter installed in each communication cell for irradiating the cell with a data-modulated optical signal to perform data transmission to a terminal located therein, the optical signal transmitter comprising:
an optical signal source (430a, 430b, 430c) for outputting said data-modulated optical signal;
an optical signal diffuser (440a, 440b, 440c) for diffusing, reflecting a portion of said data-modulated optical signal and transmitting the remaining portion of the data-modulated optical signal; and
a concave mirror (450a, 450b, 450c) with a concave inside surface (451 a, 451b, 451c) facing said optical signal diffuser (440a, 440b, 440c) for reflecting the data-modulated optical signal diffused by said optical signal diffuser (440a, 440b, 440c) toward said cell.

4. An optical signal transmitter (420a) as defined in Claim 3, wherein said optical signal diffuser (440a) has a lower surface facing the output end of said optical signal source (430a) and an upper surface opposite to said lower surface, and the concave inside surface of said concave mirror (450a) faces the upper surface of said optical signal diffuser (440a).

5. An optical signal transmitter (420b) as defined in Claim 3, wherein said optical signal diffuser (440b) has an upper surface facing the output end of said optical signal source (430b) and a lower surface opposite to said upper surface, and the concave inside surface (451b) of said concave mirror (450b) faces the upper surface of said optical signal diffuser (440b).

6. An optical signal transmitter (420c) as defined in Claim 3, wherein said concave mirror (450c) has a central hole (454), said optical signal diffuser (440c) has an upper surface facing the output end of said optical signal source (430c) through the central hole (454) of said concave mirror (450c) and a lower surface opposite to said upper surface, and the concave inside surface (451c) of said concave mirror (450c) faces said upper surface of said optical signal diffuser (440c).

7. An optical signal transmitter (520b, 620) for an optical wireless communications network connecting a plurality of communication cells defined by dividing a local communication area for enabling optical wireless communication in each of said communication cells, an optical signal transmitter installed in each communication cell for irradiating the cell with a data-modulated optical signal to perform data transmission to a terminal located therein, the optical signal transmitter installed comprising:
an optical signal source (530b, 630) for outputting said data-modulated optical signal; and
a convex mirror (540b, 640) having a convex lower surface (542b, 642) facing the output end of said optical signal source (530b, 630) and an upper surface (541b, 641) opposite to said lower surface, wherein said convex lower surface (542b, 642) has a reflective layer (544, 644) deposited thereon for reflecting back and diverging said data-modulated optical signal outputted by said optical signal source (530b, 630) toward said cell.

8. An optical signal transmitter (520b, 620) as defined in Claim 7, wherein said reflective layer (544, 644) is a dichroic reflective layer both for reflecting said data-modulated optical signal outputted by said optical signal source (530b, 630) and transmitting optical signals of a predetermined wavelength.

9. The optical signal transmitter as defined in any one of Claims 1 to 6, wherein the concave inside surface is selected from the group consisting of: semispherical, hemispherical, circular, hyperbolic, elliptical, and angular.

10. An optical wireless communications network connecting a plurality of communication cells defined by dividing a local communication area for enabling optical wireless communication in each of said communication cells, including an optical signal transmitter according to any one of claims 1 to 9 installed in each communication cell for irradiating the cell with a data-modulated optical signal to perform data transmission to a terminal located therein.

11. An optical wireless communications network according to claim 10 wherein each optical signal transmitter is an optical signal transceiver (620).

12. An optical signal transmitter comprising:
a housing can comprising:
a concave surface at a first end; and
an opening on a second end; and
a diffuser positioned in said housing; and
a light source including a light-generating end for outputting a data-modulated optical signal.

13. The optical signal transmitter as defined in claim 12, wherein the light source is positioned between the concave surface and the diffuser and the light-generating end is directed away from the concave surface.

14. The optical signal transmitter as defined in claim 12, wherein the diffuser is positioned between the concave surface and the light source and the light-generating end is directed toward the concave surface.

15. The optical signal transmitter as defined in claim 12, wherein the concave surface included a hole therethrough, said light source is positioned outside said housing and said light generating end directed toward said hole.

16. The optical signal transmitter as defined in Claim 12, wherein the concave inside surface is selected from the group consisting of: semispherical, hemispherical, circular, hyperbolic, elliptical, and angular.

17. An optical transmitter (520a) comprising:
a light source (530a) generating a data-modulated optical signal;
a symmetrically arranged concave lens (540a) irradiated by and dispersing said data-modulated optical signal.

18. An optical transmitter comprising:
a light source generating a data-modulated optical signal;
a symmetrically arranged convex lens irradiated by and dispersing said data-modulated optical signal, wherein said convex lens irradiated by said optical signal including a reflective surface.

19. The optical transmitter as defined in claim 18, wherein the reflective surface is a dichroic material.

20. The optical transmitter as defined in claim 19, further comprising:
an optical detector positioned opposite to said light source, receiving an optical signal transmitted through said convex lens.
